Europäisches Patentamt

European Patent Office

Office européen des brevets

(11) Publication number: 0 162 495
A1

# EUROPEAN PATENT APPLICATION

(21) Application number: 85200551.1

(22) Date of filing: 09.04.85

(51) Int. Cl.⁴: G 03 B 21/00
G 03 B 27/73, F 21 V 9/10

(30) Priority: 10.04.84 NL 8401139

(43) Date of publication of application:
27.11.85 Bulletin 85/48

(84) Designated Contracting States:
AT BE CH DE FR GB IT LI LU NL SE

(71) Applicant: NEDERLANDSE CENTRALE ORGANISATIE
VOOR TOEGEPAST-NATUURWETENSCHAPPELIJK
ONDERZOEK
Juliana van Stolberglaan 148
NL-2595 CL The Hague(NL)

(72) Inventor: Mooyman, Gerardus Leonardus
Lisztstraat 8
NL-2651 VL Berkel en Roodenrijs(NL)

(74) Representative: van der Beek, George Frans et al,
Nederlandsch Octrooibureau Johan de Wittlaan 15 P.O.
Box 29720
NL-2502 LS 's-Gravenhage(NL)

(54) Colour change device for use with a light spot projector and the like.

(57) Colour change device for use with a light spot projector
and the like, provided with a colour filter housing (1) with
means of forming a light outlet opening for the light from a
light source, and with selectively movable means of filtering
transverse to the emergent light path and having various
colour filters. The means of filtering comprise a filter disc (5)
with a generally annular rim of ferrous metal, the centre of
the said disc in the rest position roughly coinciding with the
light path (v). The colour filters (8) are mounted as sectors
so as to form a circle. Around the filter disc a number of
radially arranged electromagnets (9) corresponding to the
number of colour filters are provided to attract the filter disc
and place one of the colour filters in the light path on excitation of at least one of the electromagnets.

fig-1

Croydon Printing Company Ltd

1

Colour change device for use with a light
spot projector and the like

The invention relates to a colour change device for use with a light spot projector and the like, provided with a colour filter housing with means of forming a light outlet opening for the light from a light source, and with selectively movable means of filtering fitted with various colour filters transverse to the emergent light path. This colour change device is known from Dutch Patent Application 7603525.

Such a colour change device for use with a light spot projector can very advantageously be used in ship bridge simulators to simulate shipping traffic in night situations for training purposes. Here it must be possible for the colour filters required for the light spot to be projected and for any other purposes, such as red, orange, yellow, green, white and black, to be inserted in the light path.

In the above-mentioned known colour change device, one or more plates are swivel-mounted on a rotary shaft coupled to a rotary motor such as a stepping motor. In each of these plates, there can be one or more round colour filters which are arranged next to one another in an arc and which can be swivelled in front of the light outlet opening when the stepping motor is energised. The design is relatively bulky. Furthermore, the problem arises that on changing from one colour to another, the appropriate filters for which are not adjacent to each other, several successive steps via other colour filters are needed to position the desired colour filter in front of the light outlet opening. As a result, this colour change is relatively slow.

The object of the invention is to eliminate the above-mentioned problems and provide a simple and reliable colour change device with which, in view of the requirements set in the field of application, colour changes can be achieved quickly in less than 0.1 sec, using only a small amount of power.

This is achieved according to the invention in the case of a colour change device of the type mentioned in the preamble in that the means of filtering comprise a filter disc with a generally annular rim of ferrous metal, the centre of the said disc in the rest position roughly coinciding with the light path, and in which the colour filters are mounted as sectors so as to form a circle, and that around the filter disc a number of radially arranged electromagnets are provided to attract the filter disc and place one of the colour filters in the light path on excitation of at least one of the electromagnets.

In this design according to the invention, in which the filter disc can be placed immediately in front of the light outlet opening, a slight movement of the filter disc will be sufficient to change the colour or extinguish or light up the light beam. Owing to the small diameter of the light beam and the above-mentioned slight movement, the filter disc can be small and light in weight, for which small electromagnets requiring only low electric power are sufficient. As a result, very rapid changes can be achieved in less than 0.5 sec by the colour filters, for example if the light spot to be projected has to be used as a flashing light, lighthouse light or sector light. Because of the simplicity of the design described - only one moving part - the reliability is high, and the device is largely maintenance-free. In this design according to the invention, the easy accessibility of the filter disc also means that the colour change device is easy to inspect and maintain. With this design according to the invention, driving or exciting the filter disc can be carried out easily from an output port of a microprocessor.

The invention will be explained in greater detail on the basis of an embodiment with reference to.the drawings, in which the same parts in the various figures are indicated by the same reference numbers, and in which:

Fig. 1 is a perspective view of an embodiment according to the invention;

Fig. 2 is a cross section view of the embodiment of Fig. 1;

Fig. 3 is a schematic front view of the embodiment of Fig. 1 with the filter disc in the rest position; and

Fig. 4 is an enlarged schematic front view of the embodiment of Fig. 1 with the filter disc in one of the excited positions.

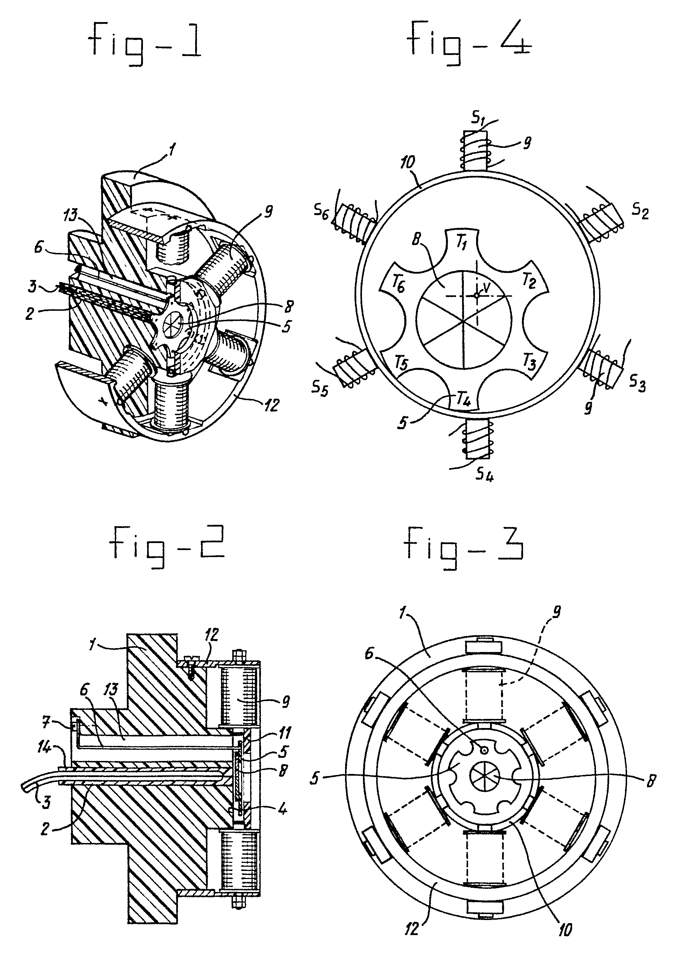

The embodiment of the invention shown in Fig. 1 comprises a colour filter housing 1 provided in the centre with a through channel 2 in which an optical fibre 3, such as a glass fibre, is accommodated in a holder, the said optical fibre acting as a light source at the plane 4 in the light outlet opening at that point. The light fibre holder 14 can be secured by means of a grab screw (not illustrated). Provided just in front of and outside the outlet plane 4 is a freely movable filter disc 5, consisting of a generally annular rim of ferrous metal. This rim is elastically suspended on a compensating spring 6 which runs through a channel 13 in the filter housing and is secured to the filter housing at the other end by means of a locking screw 7. In the filter disc 5 are a number - in this embodiment six - of sector-shaped colour filters 8. In the rest position of the disc its centre is approximately directly opposite the light outlet opening V in the path of the emergent light beam. The elastic suspension of the filter disc on the wire-type compensating spring 6 is such that both compensation for the weight of the filter disc itself, so that less electric power is needed to drive it, and a guarantee of a fixed starting position for the disc when there is no excitation are achieved.

Provided in the filter housing 1 around the filter disc are a number – in this embodiment six – of electromagnets corresponding to the number of colour filters and running radially relative to the said disc. The cores of these electromagnets are attached at one end by means of screw thread and locking nut to a mounting ring 12, while the other end of the cores project into openings of a raised ring 10 round the filter disc. In order to prevent the filter disc from being able to slip off the compensating spring, the front face of the filter housing is provided with a cover plate 11, disposed free of the disc and made of transparent material such as perspex, which may be provided in the centre with an opening for the light beam to pass through.

In order to obtain a more selective movement of one of the colour filters, the rim of the filter disc can be provided with projections or teeth situated in each case opposite the electro-magnets. The design can be such that each tooth is radially in line with an adjoining sector-shaped colour filter, the filter being suspended on the compensating spring in such a way that each tooth lies opposite an electromagnet. On selective excitation of one electromagnet, the corresponding tooth is attracted and the colour filter at the other side of the filter disc is thereby placed in front of the light outlet opening.

The design can also be as shown in Fig. 3 (rest position) and Fig. 4 (excited position), where each tooth of the teeth T1 to T6 of the filter disc is radially in line with the dividing line between two colour filters 8. On selective excitation of two adjoining electromagnets of the set of electromagnets S1 to S6, the two corresponding adjoining teeth are attracted, causing the colour filter situated at the other side between the continuous dividing lines to be positioned in front of the light outlet. opening V (Fig. 4). With this selective excitation of two adjoining electromagnets, a very stable positioning of the filter disc is obtained as a result of the disc always being fixed at two tooth positions.

As a result of mechanical friction, it can happen that the teeth, e.g. T4 and T5, do not end up precisely opposite the electromagnets S4 and S5, but this does not have any effect whatsoever on correct positioning of the colour filter opposite in relation to the light outlet opening of the light fibre so long as the teeth T4 and T5 are in contact with the cylindrical frame of the raised ring 10.

For proper functioning of the colour change device it is important that the rim of the filter disc and the cores should be made of ferrous metal, such as iron, and that the remaining parts of the device are made of plastic or non-ferrous metal.

The filter housing, preferably made of non-light-transmitting material, may be of black plastic, while the mounting ring and the magnetic core may be of iron. The compensating spring is made of steel wire, while the holder of the glass fibre is of brass. For excitation of the coils of the electromagnets, a voltage of 6 volts is adequate, with the resistance in one coil being 54 ohms. The current consumption at 6 volts is 110 mA, while the input power is 0.66 watts. With this supply voltage of 6 volts, quick driving of the filter disc takes place, while the heat generated in the coils of the electromagnets is fully acceptable.

## Claims

1. Colour change device for use with a light spot projector and the like, provided with a colour filter housing with means of forming a light outlet opening for the light from a light source, and with selectively movable means of filtering transverse to the emergent light path and having various colour filters, characterised in that the means of filtering comprise a filter disc with a generally annular rim of ferrous metal, the centre of the said disc in the rest position roughly coinciding with the light path, and in which the colour filters are mounted as sectors so as to form a circle, and that around the filter disc a number of radially arranged electromagnets corresponding to the number of colour filters are provided to attract the filter disc and place one of the colour filters in the light path on excitation of at least one of the electromagnets.

2. Colour change device according to Claim 1, characterised in that the filter disc is elastically suspended on a compensating spring attached to the filter housing.

3. Colour change device according to Claim 1 or 2, characterised in that the rim of the filter disc in the disc plane is provided with a number of projecting teeth, corresponding to the number of colour filters and each situated opposite an electromagnet.

4. Colour change device according to Claim 3, characterised in that in the filter disc the sector-shaped colour filters and the teeth are disposed in such a way that a tooth, viewed radially, is always in the centre of the sector of the adjoining colour filter, with the colour filter situated radially on the opposite side being placed in the light path on excitation of one electromagnet.

5. Colour change device according to Claim 3, characterised in that in the filter disc the sector-shaped colour filters and the teeth are disposed in such a way that a tooth is always radially in line with the dividing line between two adjoining colour filters, with the colour filter situated radially opposite the colour filter between the two attracted teeth being placed in the light path on excitation of two adjacent electromagnets.

6. Colour change device according to any of Claims 2 to 5, characterised in that the filter housing is provided with an annular rim running round the filter disc and having openings for the cores projecting at one end of the electromagnets, the other ends of which are secured in a mounting ring of the filter housing.

7. Colour change device according to Claim 6, characterised in that provision is made inside the annular rim for a cover plate of transparent material in such a way that the filter disc can move freely in the space between the plane of the light outlet opening and the cover plate.

8. Colour change device according to Claim 6, characterised in that the teeth of the filter disc are rounded approximately in accordance with the circular shape of the annular rim.

********

Fig-1

Fig-4

Fig-2

Fig-3

# EUROPEAN SEARCH REPORT

European Patent Office

01.62495

EP 85 20 0551

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | US-A-3 912 361 (J. McDONALD BENTLEY) * Columns 1-3; figures 1,2 * | 1 | G 03 B 21/00 G 03 B 27/73 F 21 V 9/10 |
| A | FR-A-1 272 906 (J.L.E LE BLANC) * Pages 1,2: figures 1-4 * | 1 | |
| A | FR-A-2 251 033 (AGFA-GEVAERT A.G.) * Pages 3-8; figure 1 * | 1 | |
| A | DE-A-1 422 667 (AGFA A.G.) * Pages 4,5; figure 2 * | 1 | |
| A | CH-A- 467 469 (DURST A.G.) * Claims 1-3; figures 1,4 * | 1 | TECHNICAL FIELDS SEARCHED (Int Cl 4) |
| A | DE-A-1 498 976 (DURST A.G.) * Pages 5-7; figures 1,2 * | 1 | G 03 B 21/00 G 03 B 27/73 F 21 V 9/10 G 03 B 27/54 F 21 P 5/02 F 21 P 5/04 F 21 P 3/00 G 03 B 21/26 G 09 F 19/20 |

The present search report has been drawn up for all claims

| Place of search | Date of completion of the search | Examiner |
|---|---|---|
| THE HAGUE | 19-07-1985 | BOEYKENS J.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82